(19) Europäisches Patentamt / European Patent Office / Office européen des brevets

(11) **EP 4 629 337 A1**

(12) **EUROPEAN PATENT APPLICATION**
published in accordance with Art. 153(4) EPC

(43) Date of publication:
**08.10.2025 Bulletin 2025/41**

(21) Application number: **23898207.8**

(22) Date of filing: **24.11.2023**

(51) International Patent Classification (IPC):
**H01M 4/525** (2010.01)        **H01M 4/505** (2010.01)
**H01M 10/052** (2010.01)        **H01M 4/02** (2006.01)

(52) Cooperative Patent Classification (CPC):
**H01M 4/02; H01M 4/505; H01M 4/525;**
**H01M 10/052;** Y02E 60/10

(86) International application number:
**PCT/KR2023/019047**

(87) International publication number:
**WO 2024/117676 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.11.2022 KR 20220162375**

(71) Applicant: **L&F Co., Ltd.**
**Daegu 42724 (KR)**

(72) Inventors:
• **KIM, Dong Woo**
**Daegu 42712 (KR)**
• **KWON, Su Youn**
**Daegu 42712 (KR)**
• **JEONG, Jae Hak**
**Daegu 42712 (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **PRECURSOR FOR PREPARING CATHODE ACTIVE MATERIAL**

(57)   The present invention discloses a precursor for preparing cathode active material, characterized by containing a transition metal and having a crystal grain size of 20 nm or less on (001) plane, as measured by XRD. This precursor not only has excellent electrochemical stability but also possesses high strength due to its excellent physical stability. As a result, the cathode active material produced from it can provide a secondary battery with excellent structural stability when the electrode plate is manufactured, as well as outstanding lifespan characteristics in repetitive charge and discharge environments.

[FIG. 1]

# EP 4 629 337 A1

**Description**

[Technical Field]

The present invention relates to a precursor for preparing cathode active material, and more specifically, to a precursor with excellent material stability and electrochemical stability by setting the conditions for the crystal grain size according to the content of the transition metal, and a cathode active material and secondary battery produced from this precursor.

[Background Art]

With the rapid advancement in the usage and performance of portable electronic devices, secondary batteries have also developed. Recently, the application areas of secondary batteries have expanded further, including long-range electric vehicles and high-capacity energy storage systems (ESS), with particular attention being focused on their capacity characteristics.

To realize high-capacity secondary batteries, active research and development is being conducted on ternary (Ni, Co, Mn) cathode materials with a high Ni content. In general, for high-Ni ternary cathode active materials, they are manufactured in the form of secondary particles composed of multiple primary particles that have aggregated. This structure has a high surface area, and with the maximization of the contact area with the electrolyte, it is an ideal structure for achieving high capacity.

However, the repeated volume changes of the cathode active material due to continuous charging and discharging, as well as the external forces applied during battery manufacturing, lead to physical structural instability of the active material, which in turn results in the deterioration of electrochemical lifespan characteristics.

As a result, while high-Ni cathode active materials, which have a structure of secondary particles composed of multiple primary particles, increase the achievable capacity, they face the issue of reduced lifespan characteristics due to structural instability.

Therefore, there is a strong need for the development of technologies that can address these issues in the industry.

[Disclosure]

[Technical Problem]

The present invention aims to solve the problems of the prior art mentioned above and the technical challenges that have been requested from the past.

Specifically, after conducting in-depth research and various experiments, the inventors of this application discovered that by limiting the crystal grain size of the precursor to a specific range based on the composition of the transition metal, the physical stability of the cathode active material produced from such a precursor can be improved, while simultaneously enhancing electrochemical stability, thereby improving the lifespan characteristics of secondary batteries, leading to the completion of the present invention.

[Technical Solution]

Therefore, the precursor for preparing cathode active material according to the present invention is characterized by containing a transition metal and having a crystal grain size of 20 nm or less on (001) plane, as measured by XRD.

As can be confirmed from the subsequent experimental results, through experiments using precursors with various transition metal compositions and crystal grain sizes within a specific range based on the XRD (001) plane, it was found that when the precursor's grain size is controlled within a specific range, the crystal grain size of the cathode active material on the (003) plane and the primary particle size of the cathode active material are also controlled within a specific range. This not only suppresses the breaking of secondary particles during the rolling process in the manufacturing of the cathode active material electrode plate, caused by the external forces applied during the rolling process, but also controls the degradation of the particle structure of the active material due to volume changes from repeated charge and discharge cycles, thereby improving the lifespan of the secondary battery.

In general, the analysis of the (crystal) grain size of the cathode active material is based on the (003) plane. When the precursor is calcined to produce the cathode active material, the (001) plane of the precursor changes to the (003) plane of the cathode active material. Therefore, in the present invention, the crystal grain size of the precursor was set based on the (001) plane.

When the crystal grain size of the precursor satisfies the condition of being 20 nm or less, as defined above, the number of grain boundaries, which hinder dislocation movement, increases, thus requiring more force for deformation. As a result, a precursor with higher strength can be provided.

The preferred range for the crystal grain size is between 10 nm and 17 nm.

In a specific example, the full width at half maximum (FWHM) of the (001) plane as measured by XRD may be 0.45 or greater.

The crystal grain size can also be calculated from the full width at half maximum (FWHM). Specifically, the crystal grain size of the precursor can be determined from the FWHM of the peak of the (001) plane in the precursor's XRD using the following Scherer Equation.

$$\text{Grain Size(nm)} = \frac{0.94 \times \text{Cu Wavelength}(0.154059)}{(001)FWHM} \times \cos\theta$$

As defined earlier, when the full width at half maximum (FWHM) is 0.45 or greater, the crystal grain size can satisfy the condition of being 20 nm or less. The preferred range for the FWHM may be 0.48 or greater, and a more desirable range may be between 0.48 and 0.76.

When the transition metal includes Ni, the more specific relationship between the Ni content and crystal grain size can be set as a relationship that satisfies the conditions of the following Equation 1, with the crystal grain size (nm) on the (001) plane measured by XRD and the Ni content (%) of the transition metal.

[Equation 1]

$$y=ax+b$$

In the above formula,

$$-0.15 \leq a \leq -0.08;$$

$$22.18 \leq b \leq 23.68;$$

x is the Ni content (%);
y is the crystal grain size (nm) of the (001) plane.

Unless otherwise specified in this specification, the "%" representing the Ni content refers to the "molar percentage" of Ni based on the total content of metals, including Ni.

As seen in Equation 1 above, since the slope (a) has a negative value, the optimal crystal grain size (y) decreases as the Ni content (x) increases, showing an inverse correlation.

The Ni content (x) may be preferably 70% or greater, more preferably 80% or greater, and particularly preferably in the range of 90% or greater.

The combination of -0.15≤a≤-0.11 and 24.18<b≤24.93 in Equation 1 can represent the optimal crystal grain size for the Ni content, and more preferably, the most optimal crystal grain size for the Ni content can be achieved when -0.13≤a≤-0.12 and 22.86≤b≤24.96.

In another specific example, the precursor according to the present invention can satisfy the condition of having a (001)/(100) peak intensity ratio of 1.00 or greater, as measured by XRD.

As can be confirmed from the experimental results described later, an analysis of the actual data for (001) and (100) peaks measured by XRD showed that the optimal crystal grain size is correlated with the (001)/(100) peak intensity ratio. This can be set under the conditions mentioned above, and more preferably, it can be set in the range of 1.05 to 2.56.

When the transition metal includes Ni, the more specific relationship between the Ni content and the (001)/(100) peak intensity ratio can be set as a correlation that satisfies the conditions of the following Equation 2, with the (001)/(100) peak intensity ratio measured by XRD and the Ni content (%) of the transition metal.

[Equation 2]

$$z=a'x+b'$$

In the above formula,

$$-0.046 \leq a' \leq -0.021$$

$$2.96 \leq b' \leq 5.89;$$

x is the Ni content (%);
z is the (001)/(100) peak intensity ratio.

As seen in Equation 2 above, since the slope (a') has a negative value, the (001)/(100) peak intensity ratio (z) decreases as the Ni content (x) increases, showing an inverse correlation. In other words, as the Ni content (x) increases, the (001)/(100) peak intensity ratio (z) of the precursor that satisfies the optimal crystal grain size decreases.

The combination of $-0.045 \leq a' \leq -0.032$ and $4.01 \leq b' \leq 5.62$ in Equation 2 can represent the (001)/(100) peak intensity ratio of a precursor with the optimal crystal grain size for the Ni content. More preferably, the (001)/(100) peak intensity ratio of the precursor with the most optimal crystal grain size for the Ni content can be achieved when $-0.042 \leq a' \leq -0.039$ and $4.82 \leq b' \leq 5.01$.

In another specific example, the precursor according to the present invention can satisfy the condition of having a (101)/(001) peak intensity ratio of 1.85 or less, as measured by XRD.

As with the explanation regarding the (001)/(100) peak intensity ratio, as can be confirmed in the subsequent experimental results, an analysis of the actual data for the (001) and (101) peaks measured by XRD showed that the optimal crystal grain size is correlated with the (101)/(001) peak intensity ratio. This can be set under the conditions mentioned above, and more preferably, it can be set in the range of 0.62 to 1.75.

When the transition metal includes Ni, the more specific relationship between the Ni content and the (101)/(001) peak intensity ratio can be set as a correlation that satisfies the conditions of the following Equation 3, with the (101)/(001) peak intensity ratio measured by XRD and the Ni content (%) of the transition metal.

[Equation 3]

$$r = a''x + b''$$

In the above formula,

$$0.013 \leq a'' \leq 0.036;$$

$$-1.65 \leq b'' \leq -0.32;$$

x is the Ni content (%);
z is the (101)/(001) peak intensity ratio.

As seen in Equation 3 above, since the slope (a") has a positive value, the (101)/(001) peak intensity ratio (r) increases as the Ni content (x) increases, showing a direct correlation. In other words, as the Ni content (x) increases, the (101)/(001) peak intensity ratio (r) of the precursor that satisfies the optimal crystal grain size increases.

The combination of $0.02 \leq a'' \leq 0.021$ and $-0.83 \leq b'' \leq -0.055$ in Equation 3 can represent the (101)/(001) peak intensity ratio of a precursor with the optimal crystal grain size for the Ni content. More preferably, the (101)/(001) peak intensity ratio of the precursor with the most optimal crystal grain size for the Ni content can be achieved when $0.0276 \leq a'' \leq 0.0278$ and $-1.17 \leq b'' \leq -1.15$.

In a specific example, the precursor according to the present invention may contain the elemental composition of the following Chemical Formula 1.

[Chemical Formula 1]  $(Ni_a M_{1-a} X_b)(OH)_c$

In the above formula,

$$0 < a < 1,\ 0 \leq b < 0.5,\ 1 \leq c \leq 3;$$

M is one or more transition metal elements that are stable in 4-fold or 6-fold coordination;

X is one or more elements selected from the group consisting of Al, Zr, Mg, B, Ti, Zn, Sn, Ca, Ge, Ga, Nb, Mo, W.

In Chemical Formula 1 above, the Ni content (a) is preferably in the range of $0.7 \leq a < 1$, and a preferred example of the transition metal (M) includes one or more of Co, Mn, and others.

The present invention also provides a cathode active material produced from the above precursor and a secondary battery that includes such a cathode active material.

As explained earlier, when the precursor is calcined to produce the cathode active material, the (001) plane of the precursor changes to the (003) plane of the cathode active material. Therefore, a precursor that satisfies the conditions set above based on the (001) plane will provide a cathode active material with a specific (003) plane.

The method for preparing the cathode active material, as well as the configuration and manufacturing method of the secondary battery, are well known in the industry. Therefore, a detailed explanation of them is omitted in this specification, and some exemplary cases are described in the following embodiments.

[Effects of the Invention]

As explained above, the precursor for preparing cathode active material according to the present invention has excellent electrochemical stability as well as high strength due to its outstanding physical stability. The cathode active material produced from it can provide a secondary battery with excellent structural stability when an electrode plate is manufactured and outstanding lifespan characteristics in repetitive charge and discharge environments.

[Brief Description of Drawings]

FIG. 1 is a graph showing the correlation between Ni content (%) and crystal grain size (nm) in Experimental Example 2;

FIG. 2 is a graph showing the correlation between Ni content (%) and the (001)/(100) peak intensity ratio in Experimental Example 3;

FIG. 3 is a graph showing the correlation between Ni content (%) and the (101)/(001) peak intensity ratio in Experimental Example 4;

FIGS. 4A to 4C are FE-SEM images of the precursor of Example 4 and the cathode active material prepared therefrom, as well as the precursor of Example 5 and the cathode active material prepared therefrom, in Experimental Example 5;

FIGS. 5A to 5H are graphs showing the results of measuring Pellet Density (PD) in Experimental Example 6 by analyzing the difference in D50 using PSD after compressing the active materials of Examples 1 to 6 and Comparative Examples 1 and 2;

FIGS. 6A and 6B are graphs showing the results of measuring the crystal grain size and 50-cycle lifespan characteristics of the precursors of Examples 1 to 4 and the cathode active materials prepared therefrom in Experimental Example 7.

[Best mode]

Now, the present invention will be described in more detail with reference to the following examples. These examples should not be construed as limiting the scope of the present invention.

[Example 1]

(Preparation of precursor)

A metal salt aqueous solution with a Ni:Co:Mn molar ratio of 96:3:1 was continuously supplied into a 30 L cylindrical reactor along with aqueous ammonia and a sodium hydroxide solution. The concentration of ammonia in the reactor was controlled to be between 3,000 and 5,000 ppm, and the pH was adjusted to 11.6 to 12.5. Under these conditions, a co-precipitation reaction was carried out at 60°C with a stirring speed of 500 rpm until the D50 reached 10 to 12 μm, thereby producing a precursor.

(Preparation of cathode active material)

The precursor prepared as described above was dry-mixed in a 10 L cylindrical reactor with LiOH as the lithium

source, $ZrO_2$ as the source material for the doping element Zr, and $Al(OH)_3$ as the source material for Al, each calculated at specific content levels. Subsequently, 4.0 kg of the resulting mixture was charged into a mullite refractory sagger, and a jig was pressed down onto the mixture to ensure that atmospheric conditions could effectively permeate to the bottom of the container. In addition, to create an atmospheric environment suitable for firing the active material inside the furnace, specific exhaust conditions and an oxygen ($O_2$) flow rate were set, and the material was calcined over a total duration of 24.0 to 36.0 hours, including heating, holding, and cooling stages.

After calcination, the cake-form active material was subjected to a coarse grinding process to reduce it to a size suitable for fine grinding. It was then pulverized using an ACM (Air Classifying Mill) grinder equipped with a rotor blade and a separation blade, under grinding / classifying conditions of 1300 rpm / 2000 rpm, respectively, to achieve a uniform particle size distribution. Subsequently, oversized particles were removed using a sieve, adjusting the particle size to approximately 10 $\mu$m. In this way, a cathode active material with excellent durability was produced by utilizing the precursor from Example 1, which has a specific crystal grain size.

On the surface of the manufactured active material, lithium remains in the form of byproducts such as LiOH and $Li_2CO_3$ at levels up to 2 wt%. Since this residual lithium can adversely affect electrode fabrication and electrochemical performance, it was removed through a washing process. To achieve this, the cathode active material prepared as described above was stirred in distilled water at a temperature of approximately 15 to 45°C with a solid content of 50 to 80% for about 30 seconds using a 20 L constant-temperature water bath. After stirring, the resulting slurry was filtered using a filtration device, and the obtained filtrate was dried in a 100°C dryer for more than 12 hours.

The dried and washed product was mixed with $H_3BO_3$ and subjected to calcination to form a boron coating. For this purpose, the washed and dried material was mixed with $H_3BO_3$ in a 10 L cylindrical mixer for 20 minutes. Approximately 0.5 to 1 kg of the mixture was then loaded into the same type of refractory sagger used in the previous calcination step. The material was calcined in a furnace under an oxygen ($O_2$) atmosphere at a temperature range of 300 to 400°C, including heating, holding, and cooling stages, for a total duration of 12.0 to 20.0 hours.

(Fabrication of cathode electrode)

The cathode active material prepared as described above was mixed with the conductive additive Super-C and the binder PVdF in a weight ratio of 95:2:3 in the solvent NMP to prepare a slurry for cathode formation. The slurry was uniformly coated onto an aluminum current collector and dried in a hot air dryer at over 120°C for more than 20 minutes to remove the NMP solvent. Subsequently, the dried electrode sheet was subjected to a roll pressing process to produce a cathode electrode with a specific porosity.

(Fabrication of lithium secondary battery)

The cathode obtained as described above was used together with a lithium metal anode as the counter electrode, and a separator was interposed between them to assemble the electrode stack. The assembled electrode stack was placed inside a battery case, and an electrolyte was injected to complete the fabrication of the lithium secondary battery. The electrolyte was prepared by dissolving 1.0 M lithium hexafluorophosphate ($LiPF_6$) in an organic solvent composed of a 1:1 volume ratio mixture of ethylene carbonate (EC) and dimethyl carbonate (DMC).

[Example 2]

Except for setting the stirring speed to 1000 rpm during precursor preparation, the overall process for fabricating the cathode active material, cathode electrode, and lithium secondary battery was carried out in the same manner as in Example 1.

[Example 3]

Except for setting the stirring speed to 1500 rpm during precursor preparation, the overall process for fabricating the cathode active material, cathode electrode, and lithium secondary battery was carried out in the same manner as in Example 1.

[Example 4]

Except for setting the stirring speed to 2000 rpm during precursor preparation, the overall process for fabricating the cathode active material, cathode electrode, and lithium secondary battery was carried out in the same manner as in Example 1.

[Example 5]

Except for using a metal salt aqueous solution with a Ni:Co:Mn composition of 90:5:5 and setting the stirring speed to 500 rpm during precursor preparation, the overall process for fabricating the cathode active material, cathode electrode, and lithium secondary battery was carried out in the same manner as in Example 1.

[Example 6]

Except for setting the stirring speed to 1000 rpm during precursor preparation, the overall process for fabricating the cathode active material, cathode electrode, and lithium secondary battery was carried out in the same manner as in Example 5.

[Example 7]

Except for setting the stirring speed to 1500 rpm during precursor preparation, the overall process for fabricating the cathode active material, cathode electrode, and lithium secondary battery was carried out in the same manner as in Example 5.

[Example 8]

Except for setting the stirring speed to 2000 rpm during precursor preparation, the overall process for fabricating the cathode active material, cathode electrode, and lithium secondary battery was carried out in the same manner as in Example 5.

[Example 9]

Except for using a metal salt aqueous solution with a Ni:Co:Mn composition of 80:5:15 and setting the stirring speed to 500 rpm during precursor preparation, the overall process for fabricating the cathode active material, cathode electrode, and lithium secondary battery was carried out in the same manner as in Example 1.

[Example 10]

Except for setting the stirring speed to 1000 rpm during precursor preparation, the overall process for fabricating the cathode active material, cathode electrode, and lithium secondary battery was carried out in the same manner as in Example 9.

[Example 11]

Except for setting the stirring speed to 1500 rpm during precursor preparation, the overall process for fabricating the cathode active material, cathode electrode, and lithium secondary battery was carried out in the same manner as in Example 9.

[Example 12]

Except for setting the stirring speed to 2000 rpm during precursor preparation, the overall process for fabricating the cathode active material, cathode electrode, and lithium secondary battery was carried out in the same manner as in Example 9.

[Example 13]

Except for using a metal salt aqueous solution with a Ni:Co:Mn composition of 70:5:25 and setting the stirring speed to 500 rpm during precursor preparation, the overall process for fabricating the cathode active material, cathode electrode, and lithium secondary battery was carried out in the same manner as in Example 1.

[Example 14]

Except for setting the stirring speed to 1000 rpm during precursor preparation, the overall process for fabricating the cathode active material, cathode electrode, and lithium secondary battery was carried out in the same manner as in Example 13.

[Example 15]

Except for setting the stirring speed to 1500 rpm during precursor preparation, the overall process for fabricating the cathode active material, cathode electrode, and lithium secondary battery was carried out in the same manner as in Example 13.

[Example 16]

Except for setting the stirring speed to 2000 rpm during precursor preparation, the overall process for fabricating the cathode active material, cathode electrode, and lithium secondary battery was carried out in the same manner as in Example 13.

[Comparative Example 1]

Except for setting the stirring speed to 100 rpm during precursor preparation, the overall process for fabricating the cathode active material, cathode electrode, and lithium secondary battery was carried out in the same manner as in Example 1.

[Comparative Example 2]

Except for setting the stirring speed to 3000 rpm during precursor preparation, the overall process for fabricating the cathode active material, cathode electrode, and lithium secondary battery was carried out in the same manner as in Example 1.

[Comparative Example 3]

Except for setting the stirring speed to 100 rpm during precursor preparation, the overall process for fabricating the cathode active material, cathode electrode, and lithium secondary battery was carried out in the same manner as in Example 5.

[Comparative Example 4]

Except for setting the stirring speed to 3000 rpm during precursor preparation, the overall process for fabricating the cathode active material, cathode electrode, and lithium secondary battery was carried out in the same manner as in Example 5.

[Comparative Example 5]

Except for setting the stirring speed to 100 rpm during precursor preparation, the overall process for fabricating the cathode active material, cathode electrode, and lithium secondary battery was carried out in the same manner as in Example 9.

[Comparative Example 6]

Except for setting the stirring speed to 3000 rpm during precursor preparation, the overall process for fabricating the cathode active material, cathode electrode, and lithium secondary battery was carried out in the same manner as in Example 9.

[Comparative Example 7]

Except for setting the stirring speed to 100 rpm during precursor preparation, the overall process for fabricating the cathode active material, cathode electrode, and lithium secondary battery was carried out in the same manner as in Example 13.

[Comparative Example 8]

Except for setting the stirring speed to 3000 rpm during precursor preparation, the overall process for fabricating the cathode active material, cathode electrode, and lithium secondary battery was carried out in the same manner as in Example 13.

[Experimental Example 1]

Comparative Examples 1 to 8 under the measurement conditions described below, and the results are summarized in Table 1 below.

<XRD measurement conditions >

Power Source: CuKα (line focus), Wavelength: 1.541836 Å
Goniometer Mode: 2θ/θ, Measurement Method: Continuous,
Counting Unit: cps
Start Angle: 10.0°, End Angle: 80.0°, Number of Integrations: 1
Sampling Step: 0.01°, Scan Speed: 2.0°/min
Voltage: 40 kV, Current: 40 mA,
Divergence Slit: 0.2 mm, Divergence Limiting Slit: 10 mm
Scattering Slit: Open, Receiving Slit: Open
Offset Angle: 0°
Goniometer Radius: 285 mm, Optics: Focusing Method
Attachment: ASC-48
Slit: Slit for D/teX Ultra
Detector: D/teX Ultra
Incident Monochromator: CBO
Ni-Kβ Filter: None
Rotation Speed: 30 rpm

In addition, for the fabricated lithium secondary batteries, repeated charge and discharge cycling was performed at 25°C using 0.5C for charging and 1.0C for discharging, with charging up to 4.3 V and discharging down to a cutoff of 3.0 V. The discharge capacity at the 50th cycle was compared to that at the 1st cycle, and the resistance at the 50th cycle was also measured. These results are summarized in Table 1.

[TABLE 1]

| Sample | Ni:Co:Mn | Precursor properties | | | | | | | Battery characteristic evaluation | | | | |
|---|---|---|---|---|---|---|---|---|---|---|---|---|---|
| | | XRD peak intensity | | | FWHM | grain size (Sherrer) | XRD peak ratio | | | | | | |
| | | (001) plane | (100) plane | (101) plane | (001) plane | (001) plane, nm | (001)/(100) | (101)/(001) | CC(mAh/g) | DC(mAh/g) | EF (%) | 50cycle lifespan (%) | 50cycle resistance ($\Omega$) |
| Comp. Ex. 1 | 96:03:01 | 1123 | 1111 | 2078 | 0.79 | 8 | 1.01 | 1.85 | 240.0 | 213.0 | 88.8 | 88.1 | 20.1 |
| Ex. 1 | | 1123 | 1070 | 1920 | 0.75 | 10 | 1.05 | 1.71 | 242.4 | 215.7 | 89.0 | 93.5 | 20.1 |
| Ex. 2 | | 1418 | 1278 | 2099 | 0.71 | 12 | 1.11 | 1.48 | 242.7 | 218.1 | 89.9 | 95.1 | 22.2 |
| Ex. 3 | | 1485 | 1238 | 2124 | 0.64 | 13 | 1.20 | 1.43 | 243.1 | 221.1 | 91.0 | 94.6 | 21.5 |
| Ex. 4 | | 1596 | 1183 | 1548 | 0.61 | 14 | 1.35 | 1.21 | 245.1 | 219.7 | 89.6 | 92.8 | 23.1 |
| Comp. Ex. 2 | | 1840 | 1296 | 1785 | 0.52 | 16 | 1.42 | 0.97 | 242.0 | 217.6 | 89.9 | 87.5 | 23.1 |
| Comp. Ex. 3 | 90:05:05 | 558 | 542 | 982 | 0.77 | 9 | 1.03 | 1.76 | 232.1 | 211.2 | 91.0 | 89.1 | 33.2 |
| Ex. 5 | | 1105 | 996 | 1801 | 0.75 | 11 | 1.11 | 1.63 | 232.1 | 210.5 | 90.7 | 94.2 | 33.2 |
| Ex. 6 | | 1269 | 1104 | 1662 | 0.70 | 12 | 1.15 | 1.31 | 232.5 | 211.2 | 90.8 | 96.3 | 34.1 |
| Ex. 7 | | 1220 | 946 | 1586 | 0.64 | 13 | 1.29 | 1.30 | 233.1 | 212.1 | 91.0 | 95.5 | 31.2 |
| Ex. 8 | | 2175 | 1360 | 2001 | 0.56 | 15 | 1.60 | 0.92 | 231.5 | 211.3 | 91.3 | 93.2 | 30.2 |
| Comp. Ex. 4 | | 2312 | 1217 | 1688 | 0.45 | 17 | 1.90 | 0.73 | 229.5 | 208.6 | 90.9 | 90.1 | 30.2 |
| Comp. Ex. 5 | 80:05:15 | 1054 | 917 | 1718 | 0.75 | 10 | 1.15 | 1.63 | 223.1 | 201.1 | 90.1 | 90.0 | 32.0 |
| Ex. 9 | | 1235 | 943 | 1754 | 0.71 | 12 | 1.31 | 1.42 | 225.2 | 205.4 | 91.2 | 95.5 | 32.0 |
| Ex. 10 | | 1310 | 910 | 1572 | 0.63 | 13 | 1.44 | 1.20 | 223.1 | 204.1 | 91.5 | 97.2 | 32.4 |
| Ex. 11 | | 1510 | 987 | 1752 | 0.56 | 15 | 1.53 | 1.16 | 222.2 | 203.8 | 91.7 | 96.4 | 31.2 |
| Ex. 12 | | 1700 | 900 | 1088 | 0.52 | 16 | 1.89 | 0.80 | 224.1 | 205.1 | 91.5 | 94.9 | 35.1 |
| Comp. Ex. 6 | | 1847 | 836 | 1182 | 0.46 | 18 | 2.21 | 0.64 | 222.1 | 201.1 | 90.5 | 90.1 | 35.1 |

(continued)

| Sample | Ni:Co:Mn | Precursor properties | | | | | | | Battery characteristic evaluation | | | | |
|---|---|---|---|---|---|---|---|---|---|---|---|---|---|
| | | XRD peak intensity | | | FWHM | grain size (Sherrer) | XRD peak ratio | | CC(mAh/g) | DC(mAh/g) | EF (%) | 50cycle lifespan (%) | 50cycle resistance (Ω) |
| | | (001) plane | (100) plane | (101) plane | (001) plane | (001) plane, nm | (001)/(100) | (101)/(001) | | | | | |
| Comp. Ex. 7 | 70:05:25 | 715 | 455 | 937 | 0.67 | 12 | 1.57 | 1.31 | 217.1 | 196.5 | 90.5 | 91.3 | 55.0 |
| Ex. 13 | | 977 | 517 | 733 | 0.60 | 14 | 1.89 | 0.75 | 218.5 | 200.1 | 91.6 | 96.9 | 55.0 |
| Ex. 14 | | 883 | 400 | 627 | 0.57 | 15 | 2.21 | 0.71 | 219.5 | 201.5 | 91.8 | 98.8 | 51.1 |
| Ex. 15 | | 1055 | 473 | 717 | 0.53 | 16 | 2.23 | 0.68 | 218.4 | 200.9 | 92.0 | 97.9 | 50.8 |
| Ex. 16 | | 1197 | 468 | 754 | 0.49 | 17 | 2.56 | 0.63 | 217.8 | 199.7 | 91.7 | 95.8 | 60.1 |
| Comp. Ex. 8 | | 1104 | 412 | 673 | 0.47 | 18 | 2.68 | 0.61 | 215.7 | 195.4 | 90.6 | 91.5 | 60.1 |

As shown in Table 1, Examples 1 to 4 used cathode active materials prepared from precursors with aNi:Co:Mn composition of 96:3:1. In these examples, the FWHM of the (001) plane ranged from 0.61 to 0.75, the crystal grain size of the (001) plane was between 10 and 14 nm, and the XRD peak intensity ratios were (001)/(100) = 1.05 to 1.35 and (101)/(001) = 1.71 to 1.21. Under these conditions, it was confirmed that the 50-cycle lifespan was superior compared to Comparative Examples 1 and 2.

Examples 5 to 8 used cathode active materials prepared from precursors with a Ni:Co:Mn composition of 90:5:5. In these examples, the FWHM of the (001) plane ranged from 0.56 to 0.75, the crystal grain size of the (001) plane was between 11 and 15 nm, and the XRD peak intensity ratios were (001)/(100) = 1.11 to 1.60 and (101)/(001) = 1.63 to 0.92. Under these conditions, it was confirmed that the 50-cycle lifespan was superior compared to Comparative Examples 3 and 4.

Examples 9 to 12 used cathode active materials prepared from precursors with a Ni:Co:Mn composition of 80:5:15. In these examples, the FWHM of the (001) plane ranged from 0.52 to 0.71, the crystal grain size of the (001) plane was between 12 and 16 nm, and the XRD peak intensity ratios were (001)/(100) = 1.31 to 1.89 and (101)/(001) = 1.42 to 0.80. Under these conditions, it was confirmed that the 50-cycle lifespan was superior compared to Comparative Examples 5 and 6.

Examples 13 to 16 used cathode active materials prepared from precursors with a Ni:Co:Mn composition of 70:5:25. In these examples, the FWHM of the (001) plane ranged from 0.49 to 0.60, the crystal grain size of the (001) plane was between 14 and 17 nm, and the XRD peak intensity ratios were (001)/(100) = 1.89 to 2.56 and (101)/(001) = 0.75 to 0.63. Under these conditions as well, the 50-cycle lifespan was found to be superior compared to Comparative Examples 6 and 7.

In conclusion, the results in Table 1 indicate that the FWHM of the (001) plane and the optimal crystal grain size exhibit a unique inverse correlation with the Ni content. Additionally, it was confirmed that the (001)/(100) peak intensity ratio has a proportional correlation with the Ni content, while the (101)/(001) peak intensity ratio shows an inverse correlation with the Ni content.

[Experimental Example 2]

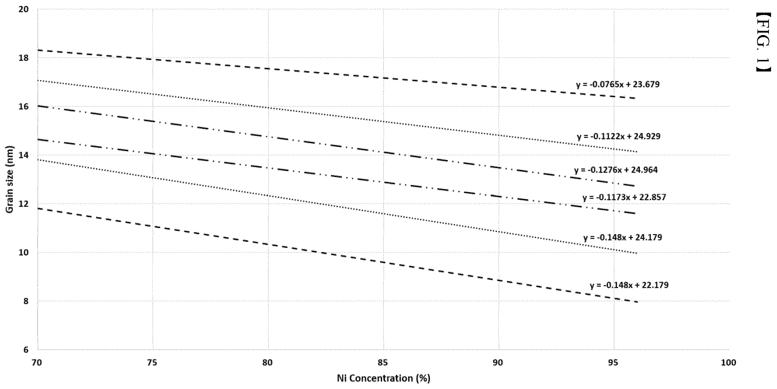

Based on the results of Experimental Example 1, the correlation between Ni content and the crystal grain size of the (001) plane was quantitatively evaluated. A graph was generated by plotting Ni content (%) on the x-axis and crystal grain size (nm) on the y-axis using the data from Table 1, and the resulting graph is shown in FIG. 1.

As shown in FIG. 1, the optimal (001) plane crystal grain size (nm) according to Ni content (%) can be represented by Equation 1. Equation 1 is a linear function expressed as $y = ax + b$, where $a$ is the slope (ranging from -0.15 to -0.08) and $b$ is the y-intercept (ranging from 22.18 to 23.68). A desirable combination of slope ($a$) and intercept ($b$) is when $a$ ranges from -0.15 to -0.11 and $b$ ranges from 24.18 to 24.93. A more preferable combination is when $a$ ranges from -0.13 to -0.12 and $b$ ranges from 22.86 to 24.96. Therefore, a precursor with an optimal crystal grain size for a given Ni content should satisfy the above conditions.

[Experimental Example 3]

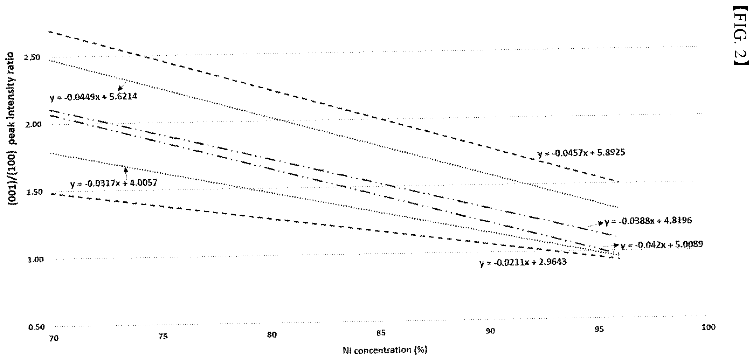

Based on the results of Experimental Example 1, the correlation between Ni content and the (001)/(100) peak intensity ratio was quantitatively evaluated. A graph was generated by plotting Ni content (%) on the x-axis and the (001)/(100) peak intensity ratio on the y-axis using the data from Table 1, and the resulting graph is shown in FIG. 2.

As shown in FIG. 2, the correlation between Ni content (%) and the (001)/(100) peak intensity ratio can be represented by Equation 2, which is expressed as $z = a'x + b'$, where $a'$ is the slope (ranging from -0.046 to -0.021) and $b'$ is the y-intercept (ranging from 2.96 to 5.89). A desirable combination of the slope ($a'$) and intercept ($b'$) is when $a'$ ranges from -0.045 to -0.032 and $b'$ ranges from 4.01 to 5.62. A more preferable combination is when $a'$ ranges from -0.042 to -0.039 and $b'$ ranges from 4.82 to 5.01, as confirmed in FIG. 2.

[Experimental Example 4]

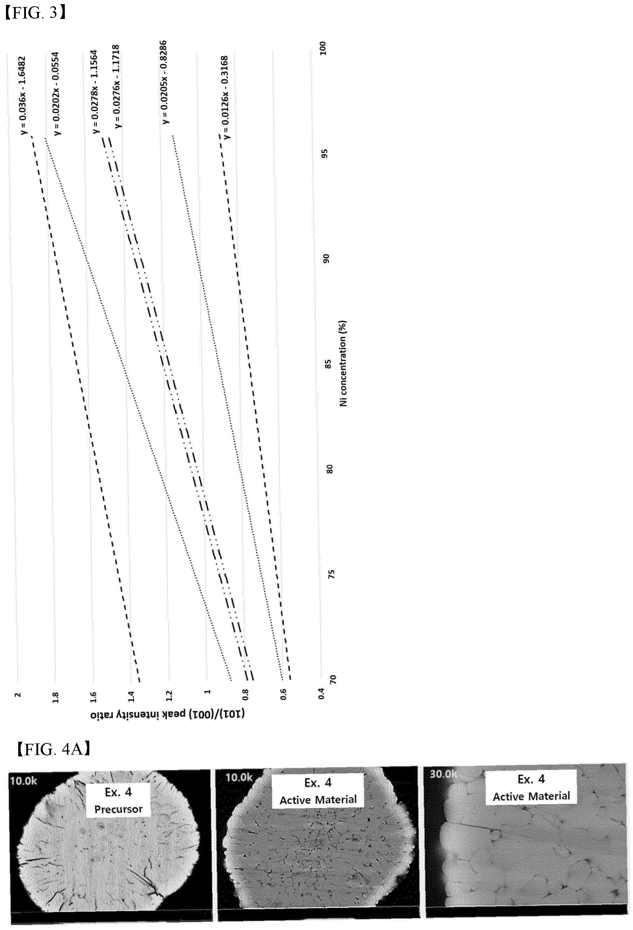

Based on the results of Experimental Example 1, the correlation between Ni content and the (101)/(001) peak intensity ratio was quantitatively evaluated. A graph was generated by plotting Ni content (%) on the x-axis and the (101)/(001) peak intensity ratio on the y-axis using the data from Table 1, and the resulting graph is shown in FIG. 3.

As shown in FIG. 3, the correlation between Ni content (%) and the (101)/(001) peak intensity ratio can be expressed by Equation 3, which is given as $r = a''x + b''$, where $a''$ is the slope (ranging from 0.013 to 0.036) and $b''$ is the y-intercept (ranging from -1.65 to -0.32). A desirable combination of slope ($a''$) and intercept ($b''$) is when $a''$ ranges from 0.020 to 0.021 and $b''$ ranges from -0.83 to -0.055. A more preferable combination is when $a''$ ranges from 0.0276 to 0.0278 and $b''$ ranges from -1.17 to -1.15, as can be confirmed in FIG. 3.

[Experimental Example 5]

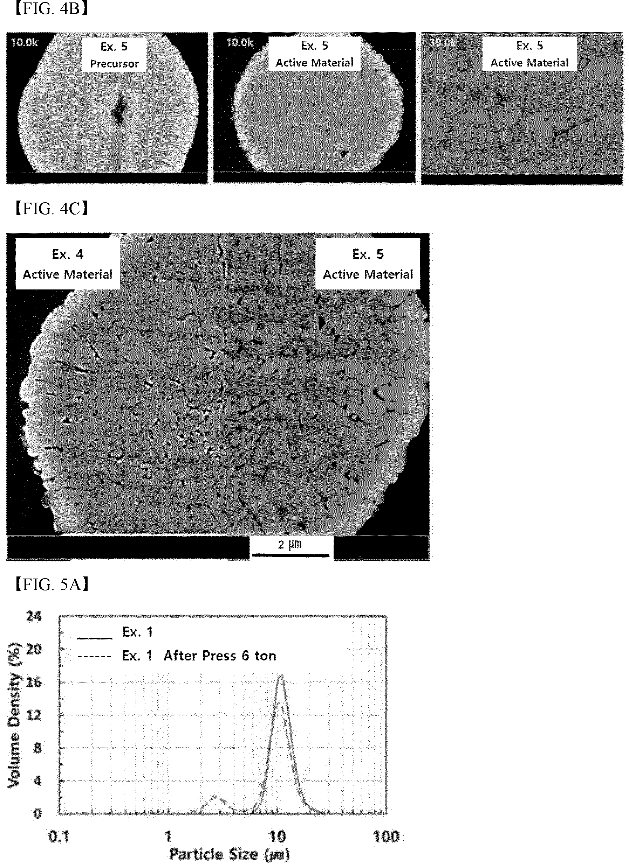

FE-SEM images were obtained for the precursor and the cathode active material derived from Example 4, as well as for the precursor and the cathode active material derived from Example 5. These images are shown in FIGS. 4A to 4C. The measured crystal grain sizes are summarized in Table 2 below.

[TABLE 2]

| Sample | | Ex. 4 | Ex. 5 |
|---|---|---|---|
| Crystal Grain Size of Precursor | nm | 13.98 | 11.01 |
| Crystal Grain Size of Cathode Active Material | | 151 | 140 |

As shown in FIGS. 4A to 4C and Table 2, a difference can be observed in the FE-SEM images depending on the crystal grain size (nm) of the (001) plane of the precursor. This tendency is similarly observed in the internal cross-sectional FE-SEM images of the cathode active materials derived from each precursor.

[Experimental Example 6]

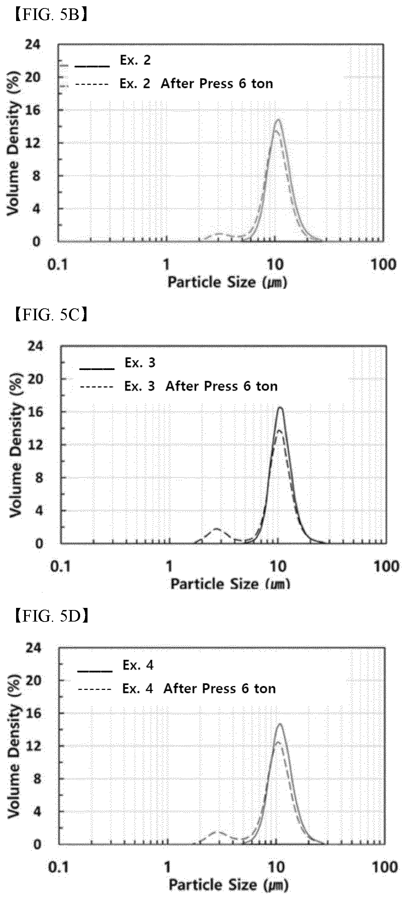

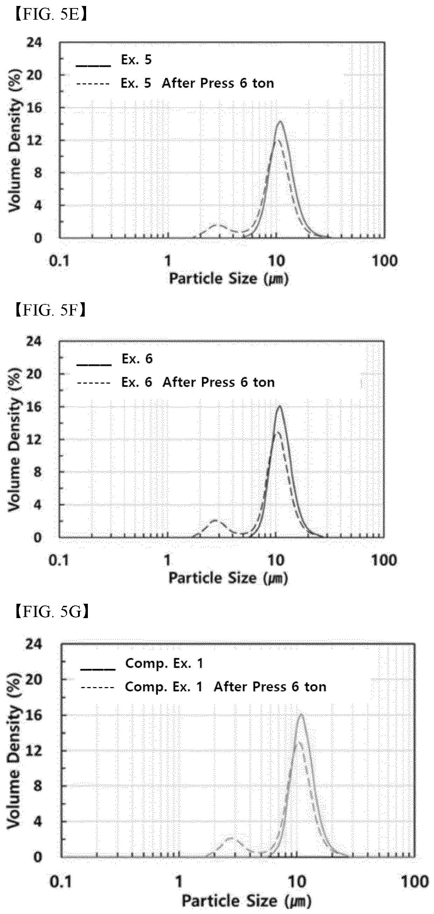

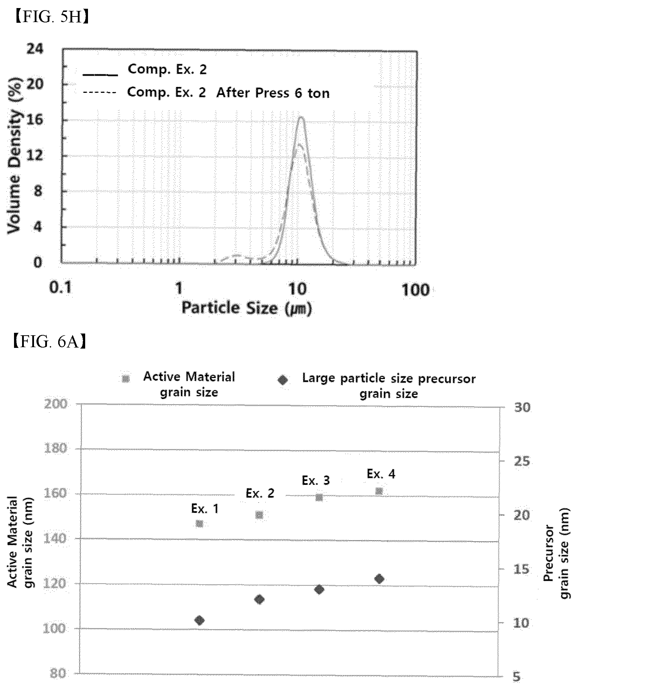

To evaluate the particle strength of the active materials obtained through the same calcination and coating processes from precursors with different crystal grain sizes (nm), the active materials of Examples 1 to 6 and Comparative Examples 1 and 2 were compressed under a pressure of 6 tons. The change in D50 was analyzed using particle size distribution (PSD) analysis, and the pellet density (PD) was measured.
The results are shown in FIGS. 5A to 5H and Table 3 below.

[TABLE 3]

| Sample | Crystal Grain Size of Precursor (nm) | Crystal Grain Size of Cathode Active Material (nm) | ΔD50 |
|---|---|---|---|
| Ex. 1 | 10 | 147 | -0.91 |
| Ex. 2 | 12 | 151 | -0.83 |
| Ex. 3 | 13 | 159 | -0.67 |
| Ex. 4 | 14 | 162 | -0.55 |
| Ex. 5 | 11 | 140 | -1.06 |
| Ex. 6 | 12 | 151 | -0.89 |
| Comp. Ex. 1 | 8 | 124 | -2.03 |
| Comp. Ex. 2 | 16 | 176 | -2.18 |

Referring to FIGS. 5A to 5H and Table 3, it was observed that as the crystal grain size (nm) of the precursor's (001) plane decreased, the crystal grain size of the (003) plane of the resulting active material also tended to decrease. Additionally, the change in D50 before and after compression, as measured by PSD, was found to be less than or equal to 1.1 $\mu$m. In other words, smaller crystal grain sizes lead to higher particle strength, resulting in fewer fractured particles after compression, which in turn leads to a smaller reduction in D50. This can be interpreted as the result of smaller crystal grain sizes promoting the formation of smaller primary particles during the growth of the active material, and the presence of more surfaces capable of absorbing external stress during compression. However, as seen in Comparative Example 1, when the crystal grain size becomes excessively small, the change in D50 before and after compression actually increases. This is presumably because a smaller grain size leads to an increase in grain boundaries, thereby creating more surfaces where particle fracture can occur. Therefore, in order to enhance particle strength, optimal control of the crystal grain size is essential.

[Experimental Example 7]

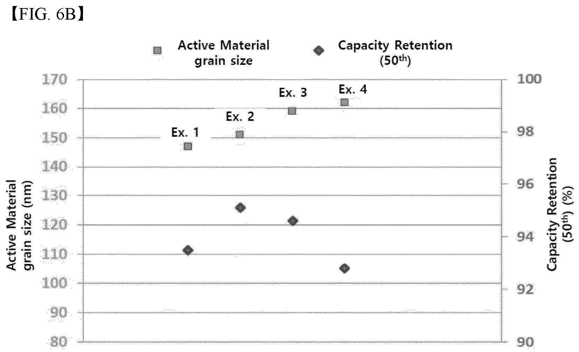

The crystal grain sizes of the precursors in Examples 1 to 6 and the cathode active materials derived therefrom were measured and are presented in FIG. 6A and Table 4 below. Additionally, based on Experimental Example 1, the 50-cycle lifespan characteristics were evaluated and are shown in FIG. 6B and also summarized in Table 4.

[TABLE 4]

|  |  | Ex. 1 | Ex. 2 | Ex. 3 | Ex. 4 |
|---|---|---|---|---|---|
| Crystal Grain Size of Precursor | nm | 10. | 12 | 13 | 14 |
| Crystal Grain Size of Cathode Active Material |  | 147 | 151 | 159 | 162 |
| Capacity Retention (50th) | % | 93.5 | 95.1 | 94.6 | 92.8 |

Referring to these experimental results, it can be observed that the crystal grain size of the precursor, based on the (001) plane, shows a consistent trend with the corresponding cathode active material prepared from it. Specifically, smaller crystal grain sizes tend to result in improved cycle life characteristics of the active material. This is attributed to the increased mechanical strength, which contributes to enhanced durability in battery operation, where repeated charge and discharge cycles are required.

Although preferred embodiments of the present invention have been disclosed for illustrative purposes, those skilled in the art will appreciate that various modifications, additions, and substitutions are possible without departing from the scope and spirit of the invention as disclosed in the accompanying claims.

**Claims**

1. A precursor for preparing a cathode active material, **characterized by** containing a transition metal and having a crystal grain size of 20 nm or less on (001) plane, as measured by XRD.

2. The precursor for preparing cathode active material according to claim 1, **characterized by** having a full width at half maximum (FWHM) of 0.45 or greater on the (001) plane, as measured by XRD.

3. The precursor for preparing cathode active material according to claim 1, **characterized in that** the transition metal includes Ni and the precursor satisfies the condition of the following Equation 1 for the crystal grain size (nm) of the (001) plane and a Ni content (%) of the transition metal, as measured by XRD:

[Equation 1]

$$y=ax+b$$

In the above formula,

$$-0.15 \leq a \leq -0.08;$$

$$22.18 \leq b \leq 23.68;$$

x is the Ni content (%);
y is the crystal grain size (nm) of the (001) plane.

4. The precursor for preparing cathode active material according to claim 1, **characterized by** having a peak intensity ratio of (001)/(100) of 1.00 or greater, as measured by XRD.

5. The precursor for preparing cathode active material according to claim 1 or claim 4, **characterized in that** the transition metal includes Ni and the precursor satisfies the condition of the following Equation 2 for the (001)/(100) peak intensity ratio and the Ni content (%) of the transition metal, as measured by XRD:

[Equation 2]

$$z=a'x+b'$$

In the above formula,

$$-0.046 \le a' \le -0.021$$

$$2.96 \le b' \le 5.89;$$

x is the Ni content (%);
z is the (001)/(100) peak intensity ratio.

6. The precursor for preparing cathode active material according to claim 1, **characterized by** having a peak intensity ratio of (101)/(001) of 1.85 or less, as measured by XRD.

7. The precursor for preparing cathode active material according to claim 1 or claim 6, **characterized in that** the transition metal includes Ni and the precuror satisfies the condition of the following Equation 3 for the (101)/(001) peak intensity ratio and the Ni content (%) of the transition metal, as measured by XRD:

[Equation 3]

$$r = a''x + b''$$

In the above formula,

$$0.013 \le a'' \le 0.036;$$

$$-1.65 \le b'' \le -0.32;$$

x is the Ni content (%);
z is the (101)/(001) peak intensity ratio.

8. The precursor for preparing cathode active material according to claim 1, **characterized by** containing the elemental composition of the following chemical formula 1:

[Chemical Formula 1]    $(Ni_aM_{1-aXb})(OH)_c$

In the above formula,

$$0 < a < 1,\ 0 \le b < 0.5,\ 1 \le c \le 3;$$

M is one or more transition metal elements that are stable in 4-fold or 6-fold coordination;
X is one or more elements selected from the group consisting of Al, Zr, Mg, B, Ti, Zn, Sn, Ca, Ge, Ga, Nb, Mo, W.

9. A cathode active material, **characterized by** being produced by mixing the precursor according to claim 1 with a lithium precursor and firing.

10. A secondary battery, **characterized by** including the cathode active material according to claim 9.

【FIG. 1】

【FIG. 2】

【FIG. 3】

【FIG. 4A】

【FIG. 4B】

【FIG. 4C】

【FIG. 5A】

【FIG. 5B】

【FIG. 5C】

【FIG. 5D】

【FIG. 5E】

【FIG. 5F】

【FIG. 5G】

【FIG. 5H】

【FIG. 6A】

【FIG. 6B】

## INTERNATIONAL SEARCH REPORT

| International application No. |
|---|
| **PCT/KR2023/019047** |

| A. | CLASSIFICATION OF SUBJECT MATTER |
|---|---|

**H01M 4/525**(2010.01)i; **H01M 4/505**(2010.01)i; **H01M 10/052**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/525(2010.01); H01M 10/052(2010.01); H01M 10/0525(2010.01); H01M 4/131(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전구체(precursor), 결정(crystal), 크기(size), X-선회절(X-ray diffraction), 활물질 (active material), 이차전지(secondary battery)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2021-0117989 A (LG CHEM, LTD.) 29 September 2021 (2021-09-29)<br>See claim 10, paragraphs [0113], [0120], [0160], [0201], [0223] and [0226], and table 1. | 1-3,8-10 |
| Y | | 4-7 |
| Y | KR 10-2022-0084363 A (CHINA PETROLEUM AND CHEMICAL CORPORATION et al.) 21 June 2022 (2022-06-21)<br>See claim 1. | 4,5 |
| Y | KR 10-2022-0049132 A (L & F CO., LTD.) 21 April 2022 (2022-04-21)<br>See claim 1. | 6,7 |
| A | KR 10-2022-0103716 A (JOHNSON MATTHEY PUBLIC LIMITED COMPANY) 22 July 2022 (2022-07-22)<br>See claims 1-25. | 1-10 |

✓ Further documents are listed in the continuation of Box C.    ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **29 February 2024** | **29 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2023/019047** |

### C.    DOCUMENTS CONSIDERED TO BE RELEVANT

| Category* | Citation of document, with indication, where appropriate, of the relevant passages | Relevant to claim No. |
|---|---|---|
| A | KR 10-2018-0038580 A (UMICORE et al.) 16 April 2018 (2018-04-16)<br>  See claims 1-17. | 1-10 |
| PX | KR 10-2599686 B1 (L & F CO., LTD.) 08 November 2023 (2023-11-08)<br>  See claims 1 and 3-11.<br>  This document is a published earlier application that serves as a basis for claiming priority<br>  of the present international application. | 1-10 |

Form PCT/ISA/210 (second sheet) (July 2022)

EP 4 629 337 A1

## INTERNATIONAL SEARCH REPORT
### Information on patent family members

International application No.

**PCT/KR2023/019047**

| Patent document cited in search report | | | Publication date (day/month/year) | Patent family member(s) | | | Publication date (day/month/year) |
|---|---|---|---|---|---|---|---|
| KR | 10-2021-0117989 | A | 29 September 2021 | CN | 114728812 | A | 08 July 2022 |
| | | | | EP | 4046968 | A1 | 24 August 2022 |
| | | | | JP | 2023-507314 | A | 22 February 2023 |
| | | | | KR | 10-2490392 | B1 | 26 January 2023 |
| | | | | US | 2022-0407063 | A1 | 22 December 2022 |
| | | | | WO | 2021-187963 | A1 | 23 September 2021 |
| KR | 10-2022-0084363 | A | 21 June 2022 | AU | 2020-367186 | A1 | 21 April 2022 |
| | | | | AU | 2020-367186 | A1 | 22 April 2021 |
| | | | | BR | 112022006646 | A2 | 12 July 2022 |
| | | | | CA | 3156276 | A1 | 22 April 2021 |
| | | | | CN | 112687870 | A | 20 April 2021 |
| | | | | CN | 112687870 | B | 28 December 2021 |
| | | | | CN | 112687871 | A | 20 April 2021 |
| | | | | CN | 112687871 | B | 04 November 2022 |
| | | | | EP | 4047690 | A1 | 24 August 2022 |
| | | | | JP | 2022-553217 | A | 22 December 2022 |
| | | | | MX | 2022004587 | A | 15 August 2022 |
| | | | | US | 2022-0388863 | A1 | 08 December 2022 |
| | | | | WO | 2021-073583 | A1 | 22 April 2021 |
| | | | | ZA | 202205597 | B | 27 September 2023 |
| KR | 10-2022-0049132 | A | 21 April 2022 | WO | 2022-080710 | A1 | 21 April 2022 |
| KR | 10-2022-0103716 | A | 22 July 2022 | CN | 114555530 | A | 27 May 2022 |
| | | | | EP | 3917883 | A1 | 08 December 2021 |
| | | | | JP | 2022-552954 | A | 21 December 2022 |
| | | | | US | 2022-0376242 | A1 | 24 November 2022 |
| | | | | WO | 2021-074641 | A1 | 22 April 2021 |
| KR | 10-2018-0038580 | A | 16 April 2018 | CN | 108140828 | A | 08 June 2018 |
| | | | | CN | 108140828 | B | 26 February 2021 |
| | | | | EP | 3347934 | A1 | 18 July 2018 |
| | | | | EP | 3347934 | B1 | 02 December 2020 |
| | | | | HU | E053377 | T2 | 28 June 2021 |
| | | | | JP | 2018-529195 | A | 04 October 2018 |
| | | | | JP | 6744051 | B2 | 19 August 2020 |
| | | | | KR | 10-2081009 | B1 | 24 February 2020 |
| | | | | PL | 3347934 | T3 | 17 May 2021 |
| | | | | TW | 201724623 | A | 01 July 2017 |
| | | | | TW | I606629 | B | 21 November 2017 |
| | | | | US | 10756344 | B2 | 25 August 2020 |
| | | | | US | 2018-0351174 | A1 | 06 December 2018 |
| | | | | WO | 2017-042654 | A1 | 16 March 2017 |
| KR | 10-2599686 | B1 | 08 November 2023 | None | | | |

Form PCT/ISA/210 (patent family annex) (July 2022)

26